Europäisches Patentamt

European Patent Office

Office européen des brevets

(11) Publication number: **0 474 950 A1**

# EUROPEAN PATENT APPLICATION

(21) Application number: **90610060.7**

(22) Date of filing: **14.09.90**

(51) Int. Cl.5: **F16J 15/32**

(43) Date of publication of application:
**18.03.92 Bulletin 92/12**

(84) Designated Contracting States:
**AT BE CH DE DK ES FR GB GR IT LI LU NL SE**

(71) Applicant: **W.S. Shamban Europa A/S**
**No. 17, Fabriksvej**
**DK-3000 Helsingor(DK)**

(72) Inventor: **Christiansen, Bendt**
Odinsvej 63
DK-3000 Helsingor(DK)
Inventor: **Skov, Torben**
Jagtvej 200, 3.th.
DK-2100 Kobenhavn O(DK)

(74) Representative: **Vingtoft, Knud Erik et al**
**Plougmann & Vingtoft Sankt Annae Plads 11**
**P.O. Box 3007**
**DK-1021 Copenhagen K(DK)**

(54) **A sealing device and a method of making the same.**

(57) A sealing device is adapted to seal against the outer peripheral surface of a rotatable shaft (12) which extends through a housing wall (13) separating areas in which the pressures may be different. The sealing device (10) comprises an outer casing member (16) having a first substantially cylindrical part (18) and a first ring-shaped end wall part (19) defining a central opening receiving the shaft, and an inner annular casing member (17) having a second substantially cylindrical wall part engaging with the inner surface of the first cylindrical wall part (18) and a second ring-shaped end-wall part (21). An outer rim portion of a radially extending annular shaft sealing member (22) is firmly clamped between the inner and outer end wall surfaces, and the radially inner free rim portion of the sealing member forms a shaft sealing lip (24) defining a central opening with a diameter, which in the unstressed condition of the shaft sealing member is smaller than the diameter of the shaft (12). A radially extending space (27), which is filled by an elastomeric material (28) in a compressed condition is defined between the side surface of the sealing member (22) facing the higher pressure area and the radially outer portion (26) of the second end wall part (21). The compressed elastomeric material forms a high pressure seal, and the shaft sealing member (22) is safely clamped directly between a radially inner rim portion (25) of the second end wall part (21) and the first end wall part (19).

FIG.1

The present invention relates to a sealing device for sealing against the outer peripheral surface of a shaft extending through a housing wall separating spaces or areas in which the pressures may be different. By way of examples, such sealing device may be used for sealing journal bearings, shaft bearings and crank shaft bearings in electric motors, combustion engines, pumps and compressors, cars and other vehicles.

A sealing device of this type is known for example from French patent specification No. 976,666 which discloses a sealing device comprising an annular metal casing and a substantially radially extending annular shaft sealing member, which is made from an elastic, wear resistant material. The outer rim portion of the annular sealing member is clamped between opposite, radially extending, ring-shaped casing walls made from metal. The radially inner free rim portion of the shaft sealing member forms a shaft sealing lip and defines a central opening therein with a diameter which in the unstressed condition of the shaft sealing member is smaller than the diameter of the shaft. The known sealing device is mounted stationarily in a housing wall so that a rotatable shaft extends through the central opening of the stationary shaft sealing member. Because the diameter of the central opening of the sealing member is somewhat smaller than the diameter of the shaft, the sealing lip of the sealing member extends not only radially, but also axially in relation to the shaft, whereby the sealing efficiency may be increased by a pressure difference on opposite sides of the sealing member.

Because the wear resistant shaft sealing member is made from a relatively hard material it may be difficult to obtain a sufficiently pressure tight seal between the radial metal casing walls and the sealing member clamped therebetween.

In an attempt to solve this problem the above French patent specification discloses an embodiment in which an annular disc member made from a material softer than metal, such as rubber or leather, is arranged in abutting engagement with the shaft sealing member on the high-pressure side thereof. In the latter known structure the annular shaft sealing member is clamped between a metal casing end wall and the relatively soft and elastic annular disc member. Therefore, the clamping forces retaining the shaft sealing member in position are not well defined, and the annular sealing member is not sufficiently safely retained in position during use.

The present invention relates to an improved sealing device of the above type comprising an outer annular casing member having a first substantially cylindrical part and a first ring-shaped end wall part formed integrally with and extending from one end of the first cylindrical wall part and defining a central opening for receiving said shaft, an inner annular back-up member defining a substantially cylindrical outer wall surface, which is in engagement with the inner surface of the first cylindrical wall part, and a ring-shaped outer end wall surface positioned in axially spaced relationship with the inner surface of the first end wall part, and a radially extending annular shaft sealing member having a radially outer rim portion firmly clamped between said inner and outer end wall surfaces and having a radially inner free rim portion forming a shaft sealing lip and defining a central opening with a diameter, which in the unstressed condition of the shaft sealing member is smaller than the diameter of the shaft, and the sealing device according to the invention is characterized in that the inner and/or outer radial end wall surfaces is/are shaped so as to define between a radially outer portion of one of these end wall surfaces and the adjacent opposite surface of the shaft sealing member an annular, radially extending space, which is occupied by an elastomeric material in a compressed condition and positioned at the side of the shaft sealing member adapted to face the higher pressure area.

In the sealing device according to the invention the annular shaft sealing member is in direct contact with and safely clamped between the radially inner annular areas of the inner and outer end wall surfaces of the outer casing member and the inner back-up member, respectively, which are preferably made from metal or another relatively inelastic material, such as hard plastic material. However, the radially outer portion of the annular shaft sealing member is compressed between one of these end wall surfaces and the elastomeric material. This elastomeric material, which is preferably arranged on the high-pressure side of the shaft sealing member, provides an efficient high-pressure tight sealing of the spaces defined between the outer annular casing member, the inner annular back-up member, and the shaft sealing member. Because the elastomeric material is positioned within an annular space which is closed in all directions, the elastomeric material cannot be blown out from such space by differential pressure.

The annular shaft sealing member may be of any type used in known sealing devices of the type in question, for example a sealing member made from a polytetrafluoro ethylene based material manufactured by W.S. Shamban Europa a/s and marketed under the trademark TURCITE. The elastomeric material may, for example, be natural rubber, nitrile rubber, fluorocarbon or a soft plastic material or any other sealing material which is softer than the material from which the shaft sealing member is made. The annular back-up member may be a solid ring in which an annular recess for receiving the elastomeric material has been formed. In the preferred embodiment, however, the outer casing member as well as the inner back-up member is made from sheet metal, such as steel or stainless steel, and the annular back-up member may comprise a second substantially cylindrical wall part engaging with the inner surface of the first cylindrical wall part and a second ring-shaped end wall part formed integrally with and extending from the end of the second cylindrical wall part located adjacent to the first end wall part.

The end wall part located at the high-pressure side, for example the second end wall part, may have a stepped configuration when viewed in a radial section so as to provide a radially extending space for receiving the elastomeric material.

It is important that the elastomeric material is pressed into pressure tight engagement with the inner surface of the cylindrical wall part of the outer casing member and against the adjacent side surface of the shaft sealing member. Therefore, the radially extending space may partly be defined by inclined surface parts formed on the back-up member so as to force the elastomeric material into sealing engagement with said surface parts when the inner and outer end wall surfaces are pressed towards each other during assembly of the sealing device. These inclined surface parts may be formed by rounded edge portions and/or by the step of the above mentioned stepped second end wall part. The inclined surface parts may each define an acute angle with the axis of the shaft, for example in the range of 30°-60°, preferably about 45°.

The radially extending space receiving the elastomeric material preferably has a radial extension which is several times the axial width thereof so that the space is rather narrow. As an example, the radial extension of the space may exceed one third of and preferably is about half the radial extension of the end wall part, for example the second end wall part, which is in contact with the elastomeric material.

The first and second end wall parts may have substantially the same radial extension. In one embodiment, the radial extension of the first end wall part exceeds that of the second end wall part, and the radially inner free rim portion of the first end wall part may then be turned axially inwardly in the casing member, whereby the inwardly turned end wall part may support the likewise inwardly turned radially inner sealing lip of the shaft sealing member.

The sealing device may comprise two annular shaft sealing members arranged in face to face relationship and having their radially outer rim portions clamped between said inner and outer end wall surfaces, and the radially inner sealing lips of the sealing members may then be turned in opposite axial directions in a manner known per se.

The invention also relates to a method of making the above sealing device, said method comprising arranging the annular back-up member within the outer annular casing member in telescopic relationship, positioning the annular shaft sealing member between the first and second annular end wall parts, positioning the annular elastomeric material between the shaft sealing member and the second end wall part, applying a first axial pressure to the radially inner rim portions of the first and second end wall parts so as to clamp the shaft sealing member therebetween, interconnecting the inner back-up member and the outer casing member, and subsequently releasing said first pressure.

The first axial pressure applied to the first and second end wall parts may also compress the elastomeric material. In the preferred embodiment, however, a second axial pressure is applied to the radially outer rim portions of the first and second end wall parts so as to compress the elastomeric material therebetween. The first axial pressure may then be chosen so that the radially inner rim portions of the first and second end wall parts, which are in direct contact with the shaft sealing member, may safely retain the shaft sealing member in position, and the second axial pressure may be chosen so as to compress the elastomeric material sufficiently to seal the structure. The shaft sealing member and the elastomeric material, which may be a separate ring element, are preferably arranged within the outer casing member prior to inserting the back-up member therein. The elastomeric material may, however, be formed on or fastened to the end wall of the back-up member, or the elastomeric material may be introduced in an annular space defined between the shaft sealing member and the second end wall part in a liquid state, and the liquid elastomeric material may then be solidified prior to applying the second axial pressure for compressing the elastomeric material.

The inner back-up member and the outer casing member may be interconnected in any suitable manner, for example by welding when the parts are made from metal, or by heat sealing when the parts are made from plastic material. In the preferred embodiment, the second axial pressure is applied to the free edge portion of the first cylindrical wall part opposite to the first end wall part so as to bend said free edge portion radially inwardly around the adjacent free edge portion of the second cylindrical wall part so as to interconnect the back-up member and the outer casing member in the compressed condition of the elastomeric material. In this manner, a mechanical interlocking is obtained.

The said first and second pressures may be applied by suitable tools of any kind. As an example, the outer casing member and the back-up member received telescopicly therein may be arranged in a complementary shaped die, and the first axial pressure may be applied by means of a central plunger, while the second axial pressure may be applied simultaneously or subsequently by means of an edge deforming tubular plunger, which may mechanically interlock the casing member and the back-up member.

The invention will now be further described with reference to the drawings, wherein

Fig. 1 is an axial sectional view of an embodiment of the sealing device according to the invention mounted in a housing wall,

Figs. 2 and 3 are axially sectional views of modified embodiments of the sealing device shown in Fig. 1, and

Figs. 4a-4f illustrate various steps of a method of assembling a sealing device of the type shown in Fig. 1.

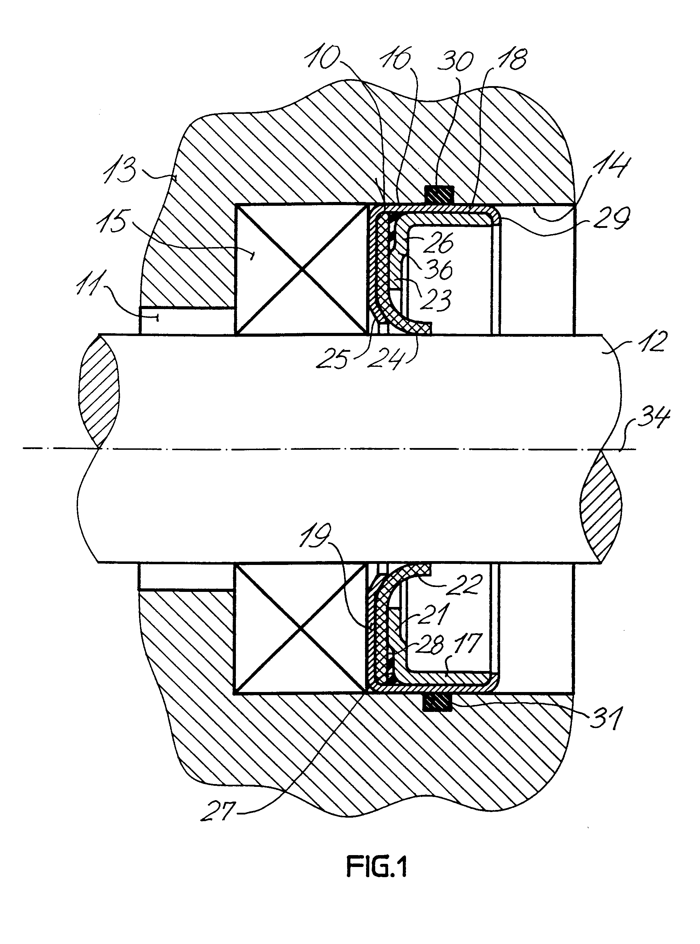

Fig. 1 shows an embodiment 10 of a shaft sealing device according to the invention, which is used for sealing an annular space 11 defined between the peripheral surface of a shaft 12 and a surrounding housing wall 13. The housing wall 13 may, for example, be part of the housing of a pump, a compressor, a motor or another device in which the pressure permanently or intermittently exceeds the ambient atmospheric pressure, and the shaft 12 may be part of a driving or a driven shaft extending through the housing wall 13. The sealing device 10 is received in a cylindrical recess 14 formed in the housing wall and this recess may also receive a bearing 15 for rotatable mounting the shaft 12 in relation to the housing wall 13.

The shaft sealing device 10 comprises an annular outer casing member 16 and an annular inner casing member 17, which are preferably made from sheet metal, such as steel, preferably stainless steel. The outer casing member 16 comprises a substantially cylindrical wall 18 engaging with an inner cylindrical surface of the recess 14, and an annular, substantially radial end wall 19. The inner casing member 17 comprises a cylindrical wall 20 engaging with and received within the outer cylindrical wall 18 and an annular, substantially radial end wall 21. An annular shaft sealing member 22 extending radially from the inner surface of the outer cylindrical wall 18 to the outer cylindrical surface of the shaft 12 is clamped between a radially inner annular part 23 of the inner end wall 21 and the opposite part of the outer end wall 19. The diameter of the central opening of the elastic shaft sealing member 22 is smaller than the outer diameter of the shaft 12 so that the radially inner sealing lip 24 of the sealing member extends radially inwardly along the shaft 12 in a cuff-like manner, whereby a super-atmospheric pressure within the housing assists in increasing the sealing efficiency of the sealing lip 24. The radially inner rim portion 25 of the outer end wall 19 is bent somewhat inwardly so as to support the axially inwardly directed sealing lip 24. The shaft sealing member 22 is made from an elastic, but relatively stiff, low-friction sealing material, such as a polytetrafluoro ethylene based plastics material.

The radially outer annular part 26 of the inner casing end wall 21 is stepped inwardly in relation to the end wall part 23 so as to define a radially extending annular space 27 defined between the end wall part 26, the opposite sealing member 22 and the outer cylindrical wall 18. This space 27 is filled with a sealing material 28 in a compressed condition. The sealing material, which should be softer and more compressible than the material of the shaft sealing member 22, is preferably an elastomeric material, such as nitrile rubber or fluorocarbon. The inner rim portion 29 of the outer cylindrical wall 18 is bent inwardly around the adjacent free edge portion of the inner cylindrical wall 20 so as to retain and interlock the casing members 16 and 17 in a mutual position in which the shaft sealing member 22 is clamped and the sealing material 28 is compressed between the end walls 19 and 20 of the casing members. The cylindrical wall 18 of the outer casing member 16 may engage with an O-ring 30 or a similar sealing ring, which is received in an annular channel 31 formed in the inner cylindrical wall of the recess 14.

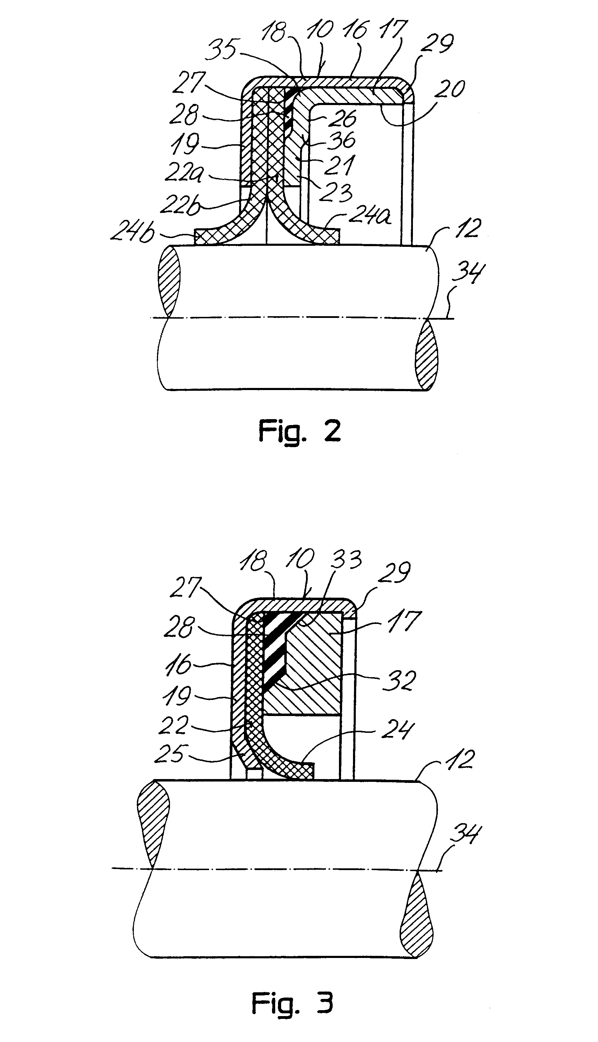

Fig. 2 shows a modified embodiment of the sealing device shown in Fig. 1, and parts of the embodiment shown in Fig. 2 similar to those shown in Fig. 1 are designated same reference numbers. In the embodiment shown in Fig. 2 the single shaft sealing member 22 shown in Fig. 1 has been replaced by a pair of annular shaft sealing members 22a and 22b having their radially outer parts clamped between the end walls 19 and 21 in face to face relationship while the free sealing lips 24a and 25b of the sealing members 22a and 22b are turned axially inwardly and axially outwardly, respectively, whereby a double-acting seal is provided. Furthermore, the bent radially inner annular part 23 of the outer end wall 19 shown in Fig. 1 has been omitted in Fig. 2 so that the end walls 19 and 21 in Fig. 2 defines central openings with substantially the same diameter.

The sealing device shown in Fig. 3 deviates from that shown in Fig. 1 substantially only by the annular inner casing member 17. In Figs. 1 and 2 the casing members 16 and 17 are made from sheet metal, for example by drawing, and the wall thickness of the inner casing member 17 preferably exceeds the wall thickness of the outer casing member 16. In Fig. 3 the outer casing member 16 is made from sheet metal, but the annular inner casing member 17 has a solid radial cross section and may be made from metal or hard plastic material by forging or molding. The annular space 27 is constituted by an annular recess formed in the annular inner casing member 17. As shown in Fig. 3 the radially inner and the radially outer parts of the surface of the inner casing member 17 forming the recess or annular space 27 are substantially frusto-conical surfaces 32 and 33 each defining an acute angle with the axis 34 of the shaft 12. These acute angles may, for example, be about 45°. When the inner casing member 17 is placed axially towards the end wall 19 of the outer casing member 16 during assembly of the sealing device the frusto-conical surfaces 32 and 33 causes the elastomer material 28 to be pressed into tight sealing engagement with not only the adjacent surface of the shaft sealing member 22, but also with the cylindrical wall 18 of the outer casing member 16. In the embodiment shown in Fig. 1 and 2 a similar effect is obtained by the rounded outer edge or corner and by the substantially frusto-conical step portion 36 of the inner casing member 17.

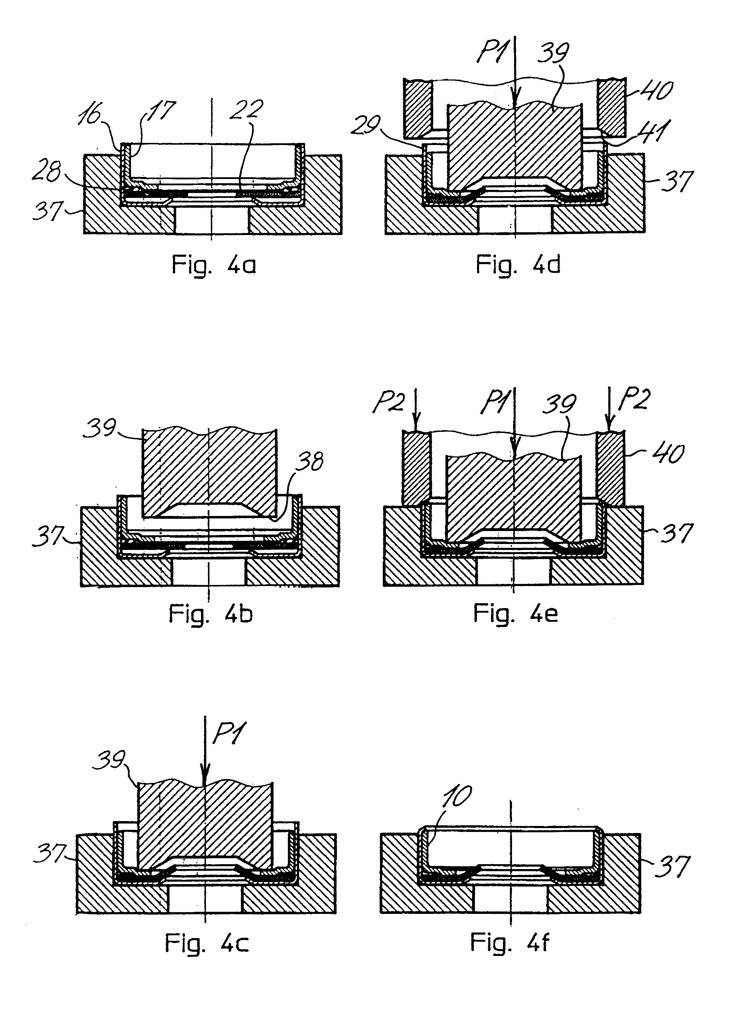

Figs. 4a-4f illustrate various steps of a method of assembling a sealing device as that shown in Fig. 1. In Fig. 4a the shaft sealing member 22 and a sealing ring 28 of an elastomeric material have been arranged between the end wall of the outer casing member 16 and the end wall of the inner casing member 17 which are arranged telescopically within the outer casing member, and this assembly is arranged in a die 37. The radially inner annular part 23 of the end wall of the inner casing member 17 may now be pressed downwardly by a corresponding annular surface 38 defined on a central plunger 39, whereby the shaft sealing member 22 is clamped between the end wall part 23 of the inner casing member and the opposite part of the outer casing member 16 by a predetermined compressive force P1 as illustrated in Fig. 4c. While the compressive force P1 is being maintained another compressive force P2 is applied to the free rib portion 29 by means of an annular plunger 40 having a substantially frusto-conical rim engaging surface formed so as to bend the rim portion 29 of the outer casing member inwardly around the adjacent free edge of the inner casing member 16 as illustrated in Fig. 4e. When the annular plunger is moved further inwardly while maintaining the compressive force P1 of the plunger 39, the sealing material or elastomeric material 28 may be further compressed to a desired extent. When the end surface of the annular plunger 40 has been moved into contact with the die 37 the inner and outer casing members 16 and 17 have been interlocked by the bent rim portion 29, and the pressures P1 and P2 may be released by withdrawing the plungers or pistons 39 and 40.

It should be understood that it would be possible to form the annular end surface 38 and the frusto-conical surface 41 on one and the same plunger, if desired.

**Claims**

1. A sealing device for sealing against the outer peripheral surface of a shaft (12) extending through a housing wall (13) separating areas in which the pressures may be different, said sealing device (10) comprising

   an outer annular casing member (16) having a first substantially cylindrical wall part (18) and a first ring-shaped end wall part (19) formed integrally with and extending from one end of the first cylindrical wall part and defining a central opening for receiving said shaft,

   an inner annular back-up member (17) defining a substantially cylindrical outer wall surface, which is in engagement with the inner surface of the first cylindrical wall part (18), and a ring-shaped outer end wall surface positioned in axially spaced relationship with the inner surface of the first end wall part (19), and

   a radially extending annular shaft sealing member (22) having a radially outer rim portion firmly clamped between said inner and outer end wall surfaces and having a radially inner free rim portion forming a shaft sealing lip (24) and defining a central opening with a diameter, which in the unstressed condition of the shaft sealing member is smaller than the diameter of the shaft (12),

   **characterized** in that the inner and/or outer radial end wall surfaces is/are shaped so as to define between a radially outer portion (26) of one of these end wall surfaces and the adjacent opposite surface of the shaft sealing member (22) an annular, radially extending space (27), which is occupied by an elastomeric material (28) in a compressed condition and positioned at the side of the shaft sealing member adapted to face the higher pressure area.

2. A sealing device according to claim 1, wherein the annular back-up member (17) comprises a second substantially cylindrical wall part (20) engaging with the inner surface of the first cylindrical wall part (18) and a second ring-shaped end wall part (21) formed integrally with and extending from the end of the second cylindrical wall part located adjacent to the first end wall part (19).

3. A sealing device according to claim 1 or 2, wherein the second end wall part (21) is of a stepped configuration when viewed in a radial section.

4. A sealing device according to any of the claims 1-3, wherein the radially extending space (27) is partly defined by inclined surface parts (32, 33; 35, 36) formed on the back-up member (17) so as to force the elastomeric material (28) into sealing engagement with the inner surfaces of the first cylindrical wall part (18) and of the shaft sealing member (22), when the inner and outer end wall surfaces are pressed towards each other.

5. A sealing device according to claim 4, wherein the inclined surface parts (32, 33; 35, 36) each define an acute angle with the axis (34) of the shaft (12), preferably of about 45°.

6. A sealing device according to any of the claims 1-5, wherein the radial extension of the radially extending space (27) is several times the axial width thereof.

7. A sealing device according to any of the claims 1-6, wherein the radial extension of the radially extending space (27) exceeds one third of and preferably is about half the radial extension of the second end wall part (21).

8. A sealing device according to any of the claims 1-7, wherein the radial extension of the first end wall part (19) exceeds that of the second end wall part (21), the radially inner free rim portion (25) of the first end wall part (19) being turned axially inwardly in the casing member (16).

9. A sealing device according to any of the claims 1-8, comprising a pair of annular shaft sealing members (22a, 22b) arranged in face to face relationship and having their radially outer rim portions clamped between said inner and outer end wall surfaces.

10. A method of making a sealing device according to any of the claims 2-9, said method comprising
    arranging the annular back-up member (17) within the outer annular casing member (16) in telescopic relationship,
    positioning the annular shaft sealing member (22) between the first and second annular end wall parts (19, 21),
    positioning the annular elastomeric material (28) between the shaft sealing member (22) and the second end wall part (21),
    applying a first axial pressure (P1) to the radially inner rim portions of the first and second end wall parts (19, 21) so as to clamp the shaft sealing member (22) therebetween,
    interconnecting the inner back-up member (17) and the outer casing member (16), and
    subsequently releasing said first pressure (P1).

11. A method according to claim 10, wherein a second axial pressure (P2) is applied to the radially outer rim portions of the first and second end wall parts (19, 21) so as to compress the elastomeric material therebetween.

12. A method according to claim 11, wherein the second axial pressure is applied to the free edge portion (29) of the first cylindrical wall part (18) opposite to the first end wall part (19) so as to bend said free edge portion radially inwardly around the adjacent free edge portion of the second cylindrical wall part (20) so as to interconnect the back-up member (17) and the outer casing member (16) in the compressed condition of the elastomeric material (28).

13. A method according to claim 12, wherein the outer casing member (16) and the back-up member (17) received telescopicly therein are arranged in a complementary shaped die (37), the first axial pressure (P1) being applied by means of a central plunger (39), and the second axial pressure (P2) being applied by means of and edge deforming tubular plunger (40).

FIG.1

Fig. 2

Fig. 3

Fig. 4a

Fig. 4d

Fig. 4b

Fig. 4e

Fig. 4c

Fig. 4f

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | AUTOMOTIVE ENGINEERING, vol. 96, no. 4, April 1988, pages 76-81, Warrendale, PA, US; "Unitized bonded PTFE wafer radial lip seal" <br> * Page 77, right-hand column, figure 2 * <br> – – – | 1,2,3,4,9 | F 16 J 15/32 |
| A | US-A-2 127 982 (NORTHUP et al.) <br> * Whole document * <br> – – – – – | 8-13 | |

TECHNICAL FIELDS
SEARCHED (Int. Cl.5)

F 16 J

The present search report has been drawn up for all claims

| Place of search | Date of completion of search | Examiner |
|---|---|---|
| The Hague | 03 June 91 | LEGER M.G.M. |